(19) Europäisches Patentamt
European Patent Office
Office européen des brevets

(11) EP 4 383 623 A1

(12) **EUROPEAN PATENT APPLICATION**
published in accordance with Art. 153(4) EPC

(43) Date of publication:
**12.06.2024 Bulletin 2024/24**

(21) Application number: **22852057.3**

(22) Date of filing: **29.07.2022**

(51) International Patent Classification (IPC):
***H04L 5/00*** *(2006.01)* ***H04L 1/18*** *(2023.01)*

(52) Cooperative Patent Classification (CPC):
**H04L 1/18; H04L 5/00; H04W 28/16; H04W 72/0453**

(86) International application number:
**PCT/CN2022/108934**

(87) International publication number:
**WO 2023/011344 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2021 CN 202110883508**

(71) Applicant: **Sharp Kabushiki Kaisha**
**Sakai-shi**
**Osaka 590-8522 (JP)**

(72) Inventors:
- **ZHAO, Yinan**
  **Shanghai 201206 (CN)**
- **LIU, Renmao**
  **Shanghai 201206 (CN)**
- **LUO, Chao**
  **Shanghai 201206 (CN)**

(74) Representative: **Müller-Boré & Partner Patentanwälte PartG mbB**
**Friedenheimer Brücke 21**
**80639 München (DE)**

(54) **METHOD EXECUTED BY USER EQUIPMENT, AND USER EQUIPMENT**

(57) According to the present invention, provided is a method performed by user equipment, including: reserving a resource (III) in a slot (II) via sidelink control information (SCI) transmitted in a slot (I), and determining a PSFCH slot (IV) corresponding to the resource (III) and used to receive a conflict indication, and if the PSFCH slot (IV) is present, receiving the conflict indication in the PSFCH slot (IV), otherwise, not receiving the conflict indication, wherein the PSFCH slot (IV) is at least (V) slots before the slot (II), wherein (V) is a predefined value depending on a corresponding subcarrier spacing configuration of SL transmission, and the PSFCH slot (IV) is at least (VI) slots after the slot (I), wherein (VI) is a configured or pre-configured value.

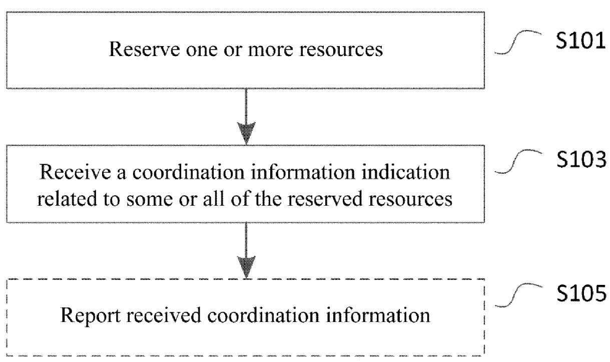


FIG. 1

EP 4 383 623 A1

## Description

TECHNICAL FIELD

The present invention relates to a method performed by user equipment, and user equipment.

BACKGROUND

Sidelink (SL) communication (e.g., when SL resource allocation mode 2 is configured) can support inter-user equipment (UE) coordination functions, e.g., coordination of resource allocation between two or more UEs. The inter-UE coordination functions need to solve a series of problems, for example, how to determine two or more UEs related to inter-UE coordination, and how to determine one or more messages related to inter-UE coordination and definitions, configurations, mapping, transmission, reception, etc., of resources respectively used thereby.

Prior Art Documents

Non-Patent Documents

Non-Patent Document 1: RP-152293, New WI proposal: Support for V2V services based on LTE sidelink
Non-Patent Document 2: RP-170798, New WID on 3GPP V2X Phase 2
Non-Patent Document 3: RP-170855, New WID on New Radio Access Technology
Non-Patent Document 4: RP-190766, New WID on 5G V2X with NR sidelink
Non-Patent Document 5: RP-201385, WID revision: NR sidelink enhancement

SUMMARY

In order to solve at least a portion of the above problems, provided in the present invention are a method performed by user equipment, and user equipment. One or more resources used to transmit a coordination information indication are determined by utilizing specific parameters (e.g., starting sub-channels, etc.) of two or more conflicting resources, thereby effectively reducing the number of coordination information indications required to be transmitted and the use of corresponding resources, and improving the efficiency of inter-UE coordination.

According to the present invention, provided is a method performed by user equipment, comprising: reserving a resource $r_i^{SL}$ in a slot $t'^{SL,u}_{y_r(i)}$ via sidelink control information (SCI) transmitted in a slot $t'^{SL,u}_{y_r(0)}$, and determining a PSFCH slot $t^{SL}_{y_c(i)}$ corresponding to the resource $r_i^{SL}$ and used to receive a conflict indication, and if the PSFCH slot $t^{SL}_{y_c(i)}$ is present, receiving the conflict indication in the PSFCH slot $t^{SL}_{y_c(i)}$, otherwise, not receiving the conflict indication, wherein the PSFCH slot $t^{SL}_{y_c(i)}$ is at least $K^{CI}_{RES,1}$ slots before the slot $t'^{SL,u}_{y_r(i)}$, wherein $K^{CI}_{RES,1}$ is a predefined value depending on a corresponding subcarrier spacing configuration of SL transmission, and the PSFCH slot $t^{SL}_{y_c(i)}$ is at least $K^{CI}_{RES,2}$ slots after the slot $t'^{SL,u}_{y_r(0)}$, wherein $K^{CI}_{RES,2}$ is a configured or pre-configured value.

In addition, according to the present invention, provided is user equipment, comprising: a processor; and a memory having instructions stored therein, wherein the instructions, when run by the processor, perform the aforementioned method.

Therefore, provided in the present invention is a method, in which one or more resources used to transmit a coordination information indication are determined by utilizing specific parameters (e.g., starting sub-channels, etc.) of two or more conflicting resources, thereby effectively reducing the number of coordination information indications required to be transmitted and the use of corresponding resources, and improving the efficiency of inter-UE coordination.

## BRIEF DESCRIPTION OF THE DRAWINGS

The above and other features of the present invention will be more apparent from the following detailed description in combination with the accompanying drawings, in which:

FIG. 1 is a flowchart showing a method performed by user equipment according to Embodiment 1 of the present invention.
FIG. 2 shows a block diagram of user equipment (UE) according to the present invention.

## DETAILED DESCRIPTION

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.
In the following description, a 5G (or referred to as "New Radio" (NR) or 5G NR) mobile communication system and later evolved versions (e.g., 5G Advanced) thereof are used as exemplary application environments to specifically describe a plurality of embodiments according to the present invention. However, it is to be noted that the present invention is not limited to the following embodiments, but is applicable to many other wireless communication systems, such as a communication system after 5G and a 4G mobile communication system before 5G.
The terms given in the present invention may vary in Long Term Evolution (LTE), LTE-Advanced, LTE-Advanced Pro, NR, and subsequent communication systems, but unified terms are used in the present invention. When applied to a specific system, the terms may be replaced with terms used in the corresponding system.
Unless otherwise specified, in all embodiments and implementations of the present invention:

- Optionally, the eNB may refer to a 4G base station. For example, the eNB may provide termination of Evolved UMTS Terrestrial Radio Access (E-UTRA) user plane and control plane protocols to the UE. As another example, the eNB may be connected to an Evolved Packet Core (EPC) via an S 1 interface.
- Optionally, the ng-eNB may refer to an enhanced 4G base station. For example, the ng-eNB may provide termination of E-UTRA user plane and control plane protocols to the UE. As another example, the ng-eNB may be connected to a 5G core network (5GC) via an NG interface.
- Optionally, the gNB may refer to a 5G base station. For example, the gNB may provide termination of NR user plane and control plane protocols to the UE. As another example, the gNB may be connected to a 5GC via an NG interface.
- Optionally, "send" and "transmit" are interchangeable.
- Optionally, a "symbol" may refer to an Orthogonal Frequency Division Multiplexing (OFDM) symbol.
- Optionally, any two of "within X", "in X", and "on X" are interchangeable with each other. X may be one or more carriers (e.g., an SL carrier), or one or more Bandwidth Parts (BWPs) (e.g., an SL BWP), or one or more resource pools (e.g., SL resource pools), or one or more links (e.g., an uplink (UL), a downlink (DL), or an SL), or one or more channels (e.g., a Physical Sidelink Shared Channel (PSSCH)), or one or more sub-channels, or one or more Resource Block Groups (RBGs), or one or more Resource Blocks (RBs), or one or more "occasions" (e.g., a Physical Downlink Control Channel (PDCCH) monitoring occasion, a PSSCH transmission occasion, a PSSCH reception occasion, a physical sidelink feedback channel (PSFCH) transmission occasion, a PSFCH reception occasion, or the like), or one or more OFDM symbols, or one or more slots, or one or more subframes, or one or more half-frames, or one or more frames, or one or more time-domain and/or frequency-domain and/or code-domain and/or spatial-domain resources, etc.
- Optionally, "higher layer" may refer to one or more protocol layers or protocol sublayers above a physical layer, such as a Medium Access Control (MAC) layer, a Radio Link Control (RLC) layer, a Packet Data Convergence Protocol (PDCP) layer, a PC5 Radio Resource Control (RRC) layer, a PC5-S, an RRC layer, a Vehicle-to-everything (V2X) layer, an application layer, a V2X application layer, or the like.
- Optionally, "pre-configure" may be pre-configuration performed in a higher-layer protocol, such as pre-configured in a specific storage location in the UE (for example, pre-configured according to the specification of the higher layer protocol), or pre-configured in a specific storage location that can be accessed by the UE (for example, pre-configured according to the specification of the higher layer protocol).
- Optionally, "configure" may be configuration performed in a higher-layer protocol by means of signaling. For example, configuration is performed for the UE by means of RRC signaling.

  ♦ Optionally, one "resource" may correspond to one or more parameters (e.g., a starting symbol of the resource, or a starting slot of the resource, or the number of symbols occupied by the resource, or the number of slots occupied by the resource, or the symbol where the resource is located (when the resource occupies only one symbol), or the slot where the resource is located (when the resource occupies only one slot)) in the time domain, and/or one or more parameters (e.g., a starting sub-channel of the resource, or a starting resource block of the resource, or a starting subcarrier of the resource, or the number of sub-channels occupied by the resource, or the number of resource blocks occupied by the resource, or the number of subcarriers occupied by the resource) in the frequency domain, and/or one or more parameters (e.g., a cyclic shift value corresponding to the resource or a corresponding a cyclic shift index, or a cyclic shift pair value corresponding to the resource or a corresponding a cyclic shift pair index) in the code domain, and/or one or more parameters (e.g., a layer corresponding to the resource, or referred to as a Multiple Input Multiple Output (MIMO) layer) in the spatial domain.

- Optionally, a time-domain resource may also be referred to as a time resource.
- Optionally, a frequency-domain resource may also be referred to as a frequency resource.
- Optionally, a resource block may refer to a Virtual Resource Block (VRB), or a Physical Resource Block (PRB), or a Common Resource Block (CRB), or a resource block defined in another manner.
- Optionally, frequency domain resource numbers (e.g., in ascending order of the frequency) may start from 0. For example, if the number of sub-channels (or subchannels) configured in a resource pool is $N_{\text{subChannel}}^{\text{SL}}$, a set of sub-channels in the resource pool may be represented by a set of corresponding sub-channel numbers as $\{0,\ 1,\ \ldots,\ N_{\text{subChannel}}^{\text{SL}} - 1\}$. As another example, a set of subcarriers in a resource block may be represented by a set of corresponding subcarrier numbers as {0, 1, ..., 11}.
- Optionally, time domain resource numbers (e.g., in chronological order) may start from 0. For example, for 30 kHz SCS, a set of slots in a subframe may be represented by a set of corresponding slot indexes as {0, 1}.
- Optionally, Sidelink Control Information "SCI" may refer to an instance of an SCI format (e.g., SCI format 1-A), or a combination of an instance of a 1st-stage SCI format (e.g., SCI format 1-A) and an instance of a corresponding 2nd-stage SCI format (e.g., SCI format 2-A), where applicable. For example, in a received SCI format 1-A, each field corresponds to a determined value. As another example, in an SCI format 1-A for transmission (or, to be transmitted), a value has been determined (or is to be determined) for each field. As another example, for a received SCI format 1-A and a corresponding SCI format 2-A, each field of each SCI format corresponds to a determined value.
- Optionally, an "SL transmission" may include any one or more of the following:

  ♦ PSSCH transmission.
  ♦ Physical Sidelink Control Channel (PSCCH) and corresponding (or associated) PSSCH transmission.
  ♦ PSCCH or corresponding (or associated) PSSCH transmission.
  ♦ PSFCH transmission.
  ♦ Sidelink-Synchronization Signal/Physical Sidelink Broadcast Channel (S-SS/PSBCH) transmission (or referred to as S-SSB transmission).

- Optionally, an "SL resource" is a resource that can be used for SL transmission.
- Optionally, "PSSCH transmission" may be replaced with "PSCCH and/or corresponding (or associated) PSSCH transmission".
- Optionally, an "SL slot" is a slot that may belong to a certain resource pool, for example, if a set of indexes of all slots (e.g., referred to as "physical slots") in a predefined period (e.g., a System Frame Number (SFN) period, or a Direct Frame Number (DFN) period; e.g., a duration of 10240 milliseconds; e.g., from SFN = 0 to SFN = 1023, or from DFN = 0 to DFN = 1023) is denoted as $T_{all} = \{0,1,\cdots,10240 \times 2^{\mu_{SL}} - 1\}$ (where $\mu_{SL}$ is a subcarrier spacing configuration of corresponding SL carriers or SL BWPs), then an "SL slot" set (e.g., denoted as $T_{all}^{SL} = \{t_0^{SL}, t_1^{SL}, \cdots, t_{T_{max}-1}^{SL}\}$, where $T_{max}$ is the number of elements in the SL slot set $T_{all}^{SL}$) may be a set of remaining slots after the following items are excluded from the physical slot set $T_{all}$:

  ♦ Slots configured with S-SSB.
  ♦ Slots where at least one of SL symbols (e.g., $N_{length}^{SL}$ consecutive symbols starting from the symbol $l_{start}^{SL}$, where $l_{start}^{SL}$ and $N_{length}^{SL}$ are respectively configured by *sl-StartSymbol* and *sl-LengthSymbols)* configured in corresponding SL BWPs is not configured to be a UL symbol.
  ♦ Reserved slots.

- Optionally, an offset between a slot $t_1$ and a slot $t_2$ (or referred to as an offset of the slot $t_2$ relative to the slot $t_1$, or referred to as an offset from the slot $t_1$ to the slot $t_2$) may be denoted as $\Delta(t_1, t_2)$. $\Delta(t_1, t_2)$ may be defined as one of the following:

  ♦ A physical slot offset. For example, $\Delta(t_1, t_2)$ may be a difference between the index of the slot $t_2$ in the physical slot set $T_{all}$ and the index of the slot $t_1$ in the physical slot set $T_{all}$. The slot $t_1$ and the slot $t_2$ may belong to the same resource pool, or belong to two different resource pools, or do not belong to any resource pool, or one of the slot $t_1$ and the slot $t_2$ belongs to a certain resource pool, and the other does not belong to any resource pool.
  ♦ An SL slot offset. For example, $\Delta(t_1, t_2)$ may be a difference between the subscript of the slot $t_2$ in the SL slot set $T_{all}^{SL}$ and the subscript of the slot $t_1$ in the SL slot set $T_{all}^{SL}$. The slot $t_1$ and the slot $t_2$ are both "SL slots". The slot $t_1$ and the slot $t_2$ may belong to the same resource pool, or belong to two different resource pools, or do not belong to any resource pool, or one of the slot $t_1$ and the slot $t_2$ belongs to a certain resource pool, and the other does not belong to any resource pool.
  ♦ A slot offset in a resource pool. For example, if a slot set of a resource pool $u$ in a predefined period (e.g., an SFN period, or a DFN period; e.g., a duration of 10240 milliseconds; e.g., from SFN = 0 to SFN = 1023, or from DFN = 0 to DFN = 1023 is denoted as $T_u^{SL} = \{t'^{SL,u}_0, t'^{SL,u}_1, ..., t'^{SL,u}_{T'^u_{max}-1}\}$, then $\Delta(t_1, t_2)$ may be a difference between the subscript of the slot $t_2$ in the set $T_u^{SL}$ and the subscript of the slot $t_1$ in the set $T_u^{SL}$. $T'^u_{max}$ is the number of elements in the set $T_u^{SL}$. The slot $t_1$ and the slot $t_2$ both belong to the resource pool $u$.
  ♦ A slot offset in a given slot set. For example, if a slot set in a predefined period (e.g., an SFN period, or a DFN period; e.g., a duration of 10240 milliseconds; e.g., from SFN = 0 to SFN = 1023, or from DFN = 0 to DFN = 1023) is denoted as $T_{any} = \{t_0^{any}, t_1^{any}, ..., t_{N_{any}^T-1}^{any}\}$, then $\Delta(t_1, t_2)$ may be a difference between the subscript of the slot $t_2$ in the set $T_{any}$ and the subscript of the slot $t_1$ in the set $T_{any}$. $N_{any}^T$ is the number of elements in the set $T_{any}$. The slot $t_1$ and the slot $t_2$ both belong to the set $T_{any}$.

SL communication can support inter-UE coordination functions, e.g., coordination of resource allocation and/or reservation and/or indication between two or more UEs, so as to improve the efficiency of resource allocation and/or reservation and/or indication and/or reduce conflicts in resource allocation and/or reservation and/or indication, etc. Specifically, for example, one UE (e.g., referred to as UE-A) may transmit, to each of one or more other UEs (e.g., collectively referred to as UE-B, or respectively referred to as UE-B1, UE-B2, ......), a "coordination information indication", where coordination information included therein may explicitly or implicitly indicate (or correspond to, or be associated with) one or more resource sets (e.g., referred to as "coordination resource sets"). One coordination information indication (or one coordination resource set) may correspond to one coordination type (or referred to as a "coordination mode" or a "coordination scheme"). A resource in a resource set may be a conflicting resource detected by UE-A (correspondingly, the coordination information indication may be referred to as a "resource conflict indication"), or may be a resource that UE-A expects UE-B to use preferentially (correspondingly, the coordination information indication may be referred to as a "preferred resource indication"), or may be a resource that UE-A does not expect UE-B to use (correspondingly, the coordination information indication may be referred to as a "non-preferred resource indication"). The coordination information may be included in control information. The control information may be physical layer control information, or higher layer control information. For example, the coordination information may be included in 1st-stage SCI. As another example, the coordination information may be included in 2nd-stage SCI. As another example, the coordination information may be included in Sidelink Feedback Control Information (SFCI). As another example, the coordination information may be included in other control information (e.g., referred to as Sidelink Coordination Control Information (SCCI)).
The coordination information may be included in a higher layer (e.g., the MAC layer, or the RRC layer) message. For example, the coordination information may be included in a MAC Control Element (MAC CE). As another example, the coordination information may be included in an RRC message.
One coordination information indication may be carried by one physical layer channel (or one transmission of the physical layer channel), or may be carried by one physical layer signal (or one transmission of the physical layer signal). For convenience, the physical layer channel/signal may be referred to as a "Physical Sidelink Coordination Information Channel/Signal" (PSCICHS).
A resource (e.g., a time domain and/or frequency domain and/or code domain and/or spatial domain resource) occupied by a PSCICHS (or a PSCICHS transmission) may be referred to as a "PSCICHS resource". Optionally, a PSCICHS resource may be referred to as a "PSCICHS occasion" or "PSCICHS occasion resource" or "PSCICHS resource occasion". For a UE that transmits a PSCICHS, a PSCICHS resource may be referred to as a "PSCICHS transmission resource" or "PSCICHS transmission occasion" or "PSCICHS transmission occasion resource" or "PSCICHS transmission resource occasion". For a UE that receives a PSCICHS, a PSCICHS resource may be referred to as a "PSCICHS reception resource" or "PSCICHS reception occasion" or "PSCICHS reception occasion resource" or "PSCICHS reception resource occasion".

PSCICHS resources may be configured in an SL carrier (e.g., configured in an information element *SL-FreqConfigCommon* or configured in an information element *SL-FreqConfig).* There may be zero or one or more "PSCICHS configurations" in one SL carrier.

PSCICHS resources may be configured in an SL BWP (e.g., configured in an information element *SL-BWP-Config* or configured in an information element *SL-BWP-Generic).* There may be zero or one or more "PSCICHS configurations" in one SL BWP. For each PSCICHS configuration, a PSCICHS resource may occupy one or more sub-channels (or one or more resource blocks) configured in one or more resource pools in the SL BWP, or does not occupy any sub-channel (or any resource block) configured in any resource pool in the SL BWP.

PSCICHS resources may be configured in a resource pool (e.g., configured in an information element *SL-ResourcePool*). There may be zero or one "PSCICHS configuration" in one resource pool. A PSCICHS resource may occupy one or more sub-channels (or one or more resource blocks) configured in the resource pool, or does not occupy any sub-channel (or any resource block) configured in the resource pool.

In the time domain, PSCICHS resources may occur periodically. A slot with PSCICHS resources may be referred to as a "PSCICHS resource slot" (or referred to as a "PSCICHS slot"). For a PSCICHS configuration, in a predefined period (e.g., an SFN period, or a DFN period; e.g., a duration of 10240 milliseconds; e.g., from SFN = 0 to SFN = 1023, or from DFN = 0 to DFN = 1023), a PSCICHS slot set may be denoted as $T_{RES}^{CI}$. For example, one PSCICHS configuration may include one PSCICHS slot period (e.g., denoted as $N_{RES}^{CI}$ in the units of, e.g., slots) and one PSCICHS slot offset (e.g., denoted as $O_{RES}^{CI}$ in the units of, e.g., slots). $N_{RES}^{CI}$ may be a predefined or configured or pre-configured value. $O_{RES}^{CI}$ may be a predefined or configured or pre-configured value. $N_{RES}^{CI}$ and $O_{RES}^{CI}$ may be defined in the physical slot set $T_{all}$. For example, for $k_1 \in T_{all}$, if $k_1 \bmod N_{RES}^{CI} = O_{RES}^{CI}$, then a slot $k_1$ is a PSCICHS slot. $N_{RES}^{CI}$ and $O_{RES}^{CI}$ may be defined in the SL slot set $T_{all}^{SL}$. For example, for $t_{k_2}^{SL} \in T_{all}^{SL}$, if $k_2 \bmod N_{RES}^{CI} = O_{RES}^{CI}$, then a slot $t_{k_2}^{SL}$ is a PSCICHS slot. $N_{RES}^{CI}$ and $O_{RES}^{CI}$ may be defined in the slot set $T_u^{SL}$ of the resource pool $u$. For example, for $t'^{SL,u}_{k_3} \in T_u^{SL}$, if $k_3 \bmod N_{RES}^{CI} = O_{RES}^{CI}$, then a slot $t'^{SL,u}_{k_3}$ is a PSCICHS slot.

In the time domain, the size of a PSCICHS resource (e.g., denoted as $N_{time,size}^{CI,RES}$, representing, e.g., $N_{time,size}^{CI,RES}$ symbols) may be a predefined or configured or pre-configured value, or may be determined by one or more predefined or configured or pre-configured values. For example, $N_{time,size}^{CI,RES} = 1$ symbol or $N_{time,size}^{CI,RES} = 2$ symbols or $N_{time,size}^{CI,RES} = 3$ symbols. One PSCICHS resource may occupy $N_{time,size}^{CI,RES}$ consecutive symbols, and the last symbol may be used as a transmission gap, that is, corresponding PSCICHS transmission does not occupy the last symbol.

In the time domain, one or more (e.g., denoted as $N_{time,num}^{CI,RES}$) PSCICHS resources may be present in one PSCICHS slot. $N_{time,num}^{CI,RES}$ may be a predefined or configured or pre-configured value (e.g., $N_{time,num}^{CI,RES} = 1$ or $N_{time,num}^{CI,RES} = 2$ or $N_{time,num}^{CI,RES} = 3$), or may be determined by one or more predefined or configured or pre-configured values. $N_{time,num}^{CI,RES}$ may depend on the number (e.g., denoted as $N_{length}^{SL}$) of symbols configured in the PSCICHS slot that can be used for SL transmission, e.g., $N_{time,num}^{CI,RES} = N_{length}^{SL}/N_{time,size}^{CI,RES}$ or

$N_{time,num}^{CI,RES} = \lfloor N_{length}^{SL} / N_{time,size}^{CI,RES} \rfloor$ or $N_{time,num}^{CI,RES} = \lceil N_{length}^{SL} / N_{time,size}^{CI,RES} \rceil$. $l_{time,start,0}^{CI,RES}$ may depend on the first symbol (e.g., denoted as $l_{start}^{SL}$) configured in the PSCICHS slot that can be used for SL transmission and/or $N_{length}^{SL}$, e.g., $l_{time,start,0}^{CI,RES} = l_{start}^{SL}$, or $l_{time,start,0}^{CI,RES} = l_{start}^{SL} + N_{length}^{SL}$.

In the frequency domain, the size of a PSCICHS resource (e.g., denoted as $N_{freq,size}^{CI,RES}$, representing, e.g., $N_{freq,size}^{CI,RES}$ subcarriers, or $N_{freq,size}^{CI,RES}$ resource blocks, or $N_{freq,size}^{CI,RES}$ resource block groups, or $N_{freq,size}^{CI,RES}$ sub-channels) may be a predefined or configured or pre-configured value, or may be determined by one or more predefined or configured or pre-configured values. For example, $N_{freq,size}^{CI,RES} = 1$ resource block. One PSCICHS resource may occupy $N_{freq,size}^{CI,RES}$ consecutive subcarriers, or $N_{freq,size}^{CI,RES}$ consecutive resource blocks, or $N_{freq,size}^{CI,RES}$ consecutive resource block groups, or $N_{freq,size}^{CI,RES}$ consecutive sub-channels.

In the frequency domain, one PSCICHS configuration may include $N_{freq,num}^{CI,RES}$ PSCICHS resources. $N_{freq,num}^{CI,RES}$ may be a predefined or configured or pre-configured value, or may be determined by one or more predefined or configured or pre-configured values. The $N_{freq,num}^{CI,RES}$ PSCICHS resources may occupy $N_{freq,size}^{CI,RES} \cdot N_{freq,size}^{CI,RES}$ consecutive subcarriers, or $N_{freq,size}^{CI,RES} \cdot N_{freq,size}^{CI,RES}$ consecutive resource blocks, or $N_{freq,size}^{CI,RES} \cdot N_{freq,size}^{CI,RES}$ consecutive resource block groups, or $N_{freq,size}^{CI,RES} \cdot N_{freq,size}^{CI,RES}$ consecutive sub-channels.

In the code domain, one PSCICHS resource may correspond to one cyclic shift value or an index of the cyclic shift value. The cyclic shift value may be used to determine a sequence corresponding to a PSCICHS transmission on the PSCICHS resource. For example, the sequence may be acquired by performing a corresponding cyclic shift on a predefined or configured or pre-configured base sequence, and is used to represent a value indicated in coordination information carried in the PSCICHS transmission. Optionally, a "cyclic shift value" may also be referred to as a "cyclic shift".

In the code domain, one PSCICHS resource may correspond to one cyclic shift pair value or an index of the cyclic shift pair value. The cyclic shift pair value may correspond to two cyclic shift values (e.g., 0 and 6). Each cyclic shift value may be used to determine a sequence corresponding to a PSCICHS transmission on the PSCICHS resource. For example, each sequence may be acquired by performing a corresponding cyclic shift on a predefined or configured or pre-configured base sequence, and is used to represent a value indicated in coordination information carried in the PSCICHS transmission. Optionally, a "cyclic shift pair value" may also be referred to as a "cyclic shift pair".

In the code domain, one PSCICHS configuration may include $N_{code,num}^{CI,RES}$ PSCICHS resources (e.g., $N_{code,num}^{CI,RES}$ PSCICHS resources may be multiplexed on a time and frequency resource with the time domain size being $N_{time,size}^{CI,RES}$ and the frequency domain size being $N_{freq,size}^{CI,RES}$). $N_{code,num}^{CI,RES}$ may be a predefined or configured or pre-configured value, or may be determined by one or more predefined or configured or pre-configured values (e.g., the number of cyclic shifts or the number of cyclic shift pairs).

For one PSCICHS configuration, $N_{tfc,num}^{CI,RES}$ PSCICHS resources may be present in one PSCICHS slot. $N_{tfc,num}^{CI,RES}$ may be related to $N_{time,num}^{CI,RES}$ and/or $N_{freq,num}^{CI,RES}$ and/or $N_{code,num}^{CI,RES}$. For example, $N_{tfc,num}^{CI,RES} = N_{time,num}^{CI,RES} \cdot N_{freq,num}^{CI,RES} \cdot N_{code,num}^{CI,RES}$. As another example, $N_{tfc,num}^{CI,RES}$ is a function of $N_{time,num}^{CI,RES} \cdot N_{freq,num}^{CI,RES} \cdot N_{code,num}^{CI,RES}$. Optionally, the $N_{tfc,num}^{CI,RES}$ PSCICHS resources may be numbered (or indexed) according to a certain order, and may be respectively numbered as, e.g., 0, 1, ·····, $N_{tfc,num}^{CI,RES} - 1$. For example, numbering is performed in the order of first the time domain, then the frequency domain, and then the code domain, or is performed in the order of first the time domain, then the code domain, and then the frequency domain, or is performed in the order of first the frequency domain, then the time domain, and then the code domain, or is performed in the order of first the frequency domain, then the code domain, and then the time domain, or is performed in the order of first the code domain, then the time domain, and then the frequency domain, or is performed in the order of first the code domain, then the frequency domain, and then the time domain.

One PSCICHS transmission may be associated with one priority. The priority may be represented by a priority value.

A coordination information indication may be triggered autonomously by a UE transmitting the coordination information. For example, if UE-A detects that resources respectively indicated (or reserved, or allocated) by UE-B 1 and UE-B2 conflict with each other, UE-A may indicate the conflict via one or more SL transmissions carrying coordination information.

A coordination information indication may be triggered by a "coordination request indication". For example, UE-B transmits a coordination request indication (e.g., which may include a coordination type indication, e.g., a "resource conflict") to UE-A, and as a response, UE-A may detect whether a resource conflict occurs between UE-B and other UEs (e.g., including UE-A or not including UE-A), and include a detection result in a coordination information indication and transmit the same to UE-B.

Optionally, a coordination request may be considered as a means of enabling an inter-UE coordination function. In this sense, the coordination request may be referred to as "coordination enable". For example, a UE that does not support the inter-UE coordination function does not transmit a coordination request indication, while a UE that supports the inter-UE coordination function may or may not transmit a coordination request indication. Optionally, in order to avoid transmission of unnecessary coordination information indications, the coordination information indication may be transmitted to only some UEs involved in one resource conflict. For example, if UE-A detects a resource conflict between a resource Ri reserved by $SCI_1$ and a resource $R_2$ reserved by $SCI_2$, and "coordination enable" is indicated in $SCI_1$ while "coordination enable" is not indicated in $SCI_2$ (or, "coordination disable" is indicated in $SCI_2$), then UE-A may transmit a coordination information indication associated with $SCI_1$ (or $R_1$), but does not transmit a coordination information indication associated with $SCI_2$ (or $R_2$).

The coordination request may be included in control information. The control information may be physical layer control information, or higher layer control information. For example, the coordination request may be included in 1st-stage SCI. As another example, the coordination request may be included in 2nd-stage SCI. As another example, the coordination request may be included in SFCI. As another example, the coordination request may be included in other control information (e.g., in SCCI).

The coordination request may be included in a higher layer (e.g., the MAC layer, or the RRC layer) message. For example, the coordination request may be included in a MAC CE. As another example, the coordination request may be included in an RRC message.

A coordination request indication may be carried by one physical layer channel (or one transmission of the physical layer channel), or may be carried by one physical layer signal (or one transmission of the physical layer signal). For convenience, the physical layer channel/signal may be referred to as a "Physical Sidelink Coordination Request Channel/Signal" (PSCRCHS). Optionally, depending on different coordination types, the PSCRCHSs may be different physical layer channels or signals. For example, for a preferred resource indication and/or a non-preferred resource indication, the PSCRCHS may be a PSCCH, or a PSSCH, or a PSCCH+PSSCH, or another physical layer channel, or a physical layer signal. For a resource conflict indication, the PSCRCHS may be a PSFCH, or another physical layer channel, or a physical layer signal.

A resource (such as a time-domain and/or frequency-domain and/or code-domain and/or spatial-domain resource) occupied by a PSCRCHS (or a PSCRCHS transmission) may be referred to as a "PSCRCHS resource". Optionally, a PSCRCHS resource may be referred to as a "PSCRCHS occasion" or "PSCRCHS occasion resource" or "PSCRCHS resource occasion". For a UE that transmits a PSCRCHS, a PSCRCHS resource may be referred to as a "PSCRCHS transmission resource" or "PSCRCHS transmission occasion" or "PSCRCHS transmission occasion resource" or "PSCRCHS transmission resource occasion". For a UE that receives a PSCRCHS, a PSCRCHS resource may be referred to as a "PSCRCHS reception resource" or "PSCRCHS reception occasion" or "PSCRCHS reception occasion resource" or "PSCRCHS reception resource occasion".

The PSCRCHS resource may be configured in an SL carrier (e.g., configured in an information element *SL-FreqConfigCommon* or configured in an information element *SL-FreqConfig).* There may be zero or one or more "PSCRCHS configurations" in one SL carrier.

The PSCRCHS resource may be configured in an SL BWP (e.g., configured in an information element *SL-*

*BWP-Config* or configured in an information element *SL-BWP-Generic).* There may be zero or one or more "PSCRCHS configurations" in one SL BWP. For each PSCRCHS configuration, the PSCRCHS resource may occupy one or more sub-channels (or one or more resource blocks) configured in one or more resource pools in the SL BWP, or does not occupy any sub-channel (or any resource block) configured in any resource pool in the SL BWP.

The PSCRCHS resource may be configured in a resource pool (e.g., configured in an information element *SL-ResourcePool*). There may be zero or one PSCRCHS configuration in one resource pool. The PSCRCHS resource may occupy one or more sub-channels (or one or more resource blocks) configured in the resource pool, or does not occupy any sub-channel (or any resource block) configured in the resource pool.

The inter-UE coordination function may be activated (or "enabled", or "configured") or deactivated (or disabled) by means of a higher layer protocol parameter (e.g., referred to as *sl-ueCoordConfig).* For example, if the parameter *sl-ueCoordConfig* is not present (or not configured), it is indicated that the inter-UE coordination function is not activated. As another example, if the parameter *sl-ueCoordConfig* is present (or configured), it is indicated that the inter-UE coordination function is activated. As another example, if the value of the parameter *sl-ueCoordConfig* (or a certain parameter in an information element corresponding to the parameter *sl-ueCoordConfig)* is a predefined value (e.g., "disabled", "false", or the like), it is indicated that the inter-UE coordination function is not activated. As another example, if the value of the parameter *sl-ueCoordConfig* (or a certain parameter in an information element corresponding to the parameter *sl-ueCoordConfig)* is a predefined value (e.g., "enabled", "true", or the like), it is indicated that the inter-UE coordination function is activated.

[Embodiment 1]

A method performed by user equipment according to Embodiment 1 of the present invention will be described below with reference to FIG. 1.

FIG. 1 is a flowchart showing a method performed by user equipment according to Embodiment 1 of the present invention.

As shown in FIG. 1, in Embodiment 1 of the present invention, the steps performed by the user equipment (UE) include: step S101, step S103, and optional step S105.

Specifically, in step S101, one or more resources are reserved (e.g., the resources are sequentially denoted as $r_1^{SL}$, ..., $r_{N_{rsvd}^{SL,RES}}^{SL}$ in chronological order, wherein $N_{rsvd}^{SL,RES} \geq 1$).

For example, $N_{SCI}^{SL,RES}$ resources are indicated by a "time resource assignment" field and/or a "frequency resource assignment" field and/or a "resource reservation period" field in SCI (e.g., denoted as $SCI_0$) carried by a PSCCH (e.g., denoted as $PSCCH_0$) and/or a PSSCH (e.g., denoted as $PSSCH_0$) transmitted in a slot $t'^{SL,u}_{y_r(0)}$ of a resource pool *u*, and are for example, sequentially denoted as $r_0^{SL}, r_1^{SL}$, ..., $r_{N_{SCI}^{SL,RES}-1}^{SL}$ in chronological order. Wherein,

- $N_{SCI}^{SL,RES} = N_{rsvd}^{SL,RES} + 1$.
- An SL BWP where the resource pool u is located is w. A corresponding subcarrier spacing configuration is $\mu_{SL}$. An SL carrier where the SL BWP w is located is *a*.
- A slot set of the resource pool *u* is $T_u^{SL} = \{t'^{SL,u}_0, t'^{SL,u}_1, \ldots, t'^{SL,u}_{T'^{u}_{max}-1}\}$, where $T'^{u}_{max}$ is the number of elements in the set $T_u^{SL}$.
- The resource $r_0^{SL}$ is occupied by $PSCCH_0$ and/or $PSSCH_0$. Correspondingly, the slot where the resource $r_0^{SL}$ is located is $t'^{SL,u}_{y_r(0)}$.
- Slots where the resources $r_1^{SL}$, ......, $r_{N_{rsvd}^{SL,RES}}^{SL}$ are located are respectively $t'^{SL,u}_{y_r(1)}$, ......, $t'^{SL,u}_{y_r(N_{rsvd}^{SL,RES})}$.
- Starting sub-channels of the resources $r_0^{SL}$, $r_1^{SL}$, ..., $r_{N_{rsvd}^{SL,RES}}^{SL}$ are respectively $n_{subCH,0}^{start}$, $n_{subCH,1}^{start}$, ..., $n_{subCH,N_{rsvd}^{SL,RES}}^{start}$. Correspondingly, starting resource blocks of the starting sub-channels $n_{subCH,0}^{start}$, $n_{subCH,1}^{start}$, ..., $n_{subCH,N_{rsvd}^{SL,RES}}^{start}$ are respectively $b_{subCH,0}^{start}$, $b_{subCH,1}^{start}$, ......, $b_{subCH,N_{rsvd}^{SL,RES}}^{start}$. Correspondingly, starting subcarriers of the starting resource blocks $b_{subCH,0}^{start}$, $b_{subCH,1}^{start}$, ..., $b_{subCH,N_{rsvd}^{SL,RES}}^{start}$ are respectively $e_{subCH,0}^{start}$, $e_{subCH,1}^{start}$, ..., $e_{subCH,N_{rsvd}^{SL,RES}}^{start}$). Indexes of the starting resource blocks $b_{subCH,0}^{start}$, $b_{subCH,1}^{start}$, ..., $b_{subCH,N_{rsvd}^{SL,RES}}^{start}$ may be respectively equal to offsets thereof relative to the starting resource block of the starting sub-channel (i.e., the resource block 0 of the sub-channel 0) of the resource pool *u*, or may be respectively equal to offsets thereof relative to the starting resource block (i.e., the physical resource block 0) of the SL BWP w. Indexes of the starting subcarrier $e_{subCH,0}^{start}$, $e_{subCH,1}^{start}$, ..., $e_{subCH,N_{rsvd}^{SL,RES}}^{start}$ may be respectively equal to offsets thereof relative to the starting subcarrier of the starting resource block of the starting sub-channel (i.e., the subcarrier 0 of the resource block 0 of the sub-channel 0) of the resource pool *u,* or may be respectively equal to offsets thereof relative to the starting subcarrier of the starting resource block (i.e., the subcarrier 0 of the physical resource block 0) of the SL BWP w.

- The resources $r_0^{SL}$, $r_1^{SL}$, ..., $r_{N_{rsvd}^{SL,RES}}^{SL}$ occupy the same number of sub-channels (e.g., denoted as $L_{\text{subCH}}$).

Optionally, $SCI_0$ includes a coordination request indication (or a coordination enable indication). For example, the value of a "coordination enable/disable" field in $SCI_0$ is set to "enabled". As another example, the value of a "coordination request type" field in $SCI_0$ is set to "resource conflict".

In addition, in step S103, a coordination information indication related to some or all of the reserved resources is received. For example, for all $i \in \{1, 2, ..., N_{rsvd}^{SL,RES}\}$, a coordination information indication (e.g., denoted as $CI_i$) is received on a PSCICHS resource $c_i^{SL}$ corresponding to (or associated with) the resource $r_i^{SL}$. As another example, for all $i \in \{1, 2, ..., N_{rsvd}^{SL,RES}\}$, if the resource $r_i^{SL}$ satisfies a first coordination information indication reception condition, the coordination information indication $CI_i$ is received on the PSCICHS resource $c_i^{SL}$. As another example, for all $i \in \{1, 2, ..., N_{rsvd}^{SL,RES}\}$, if the resource $r_i^{SL}$ does not satisfy the first coordination information indication reception condition, the coordination information indication $CI_i$ is not received on the PSCICHS resource $c_i^{SL}$.

Optionally, the PSCICHS resource $c_i^{SL}$ may also be considered as a PSCICHS resource corresponding to (or associated with) $SCI_0$ or $PSCCH_0$ or $PSSCH_0$.

Optionally, for the resource $r_i^{SL}$, the first coordination information indication reception condition includes any one or more of the following (e.g., in any combination of "and" or "or"):

- An inter-UE coordination function has been configured or pre-configured to be "enabled".
- The UE has been configured to be in SL resource allocation mode 2 (or referred to as "resource allocation mode 2"). That is, the UE autonomously determines a resource for SL transmission.
- $SCI_0$ includes a coordination request indication (or a coordination enable indication). For example, the value of a "coordination enable/disable" field in $SCI_0$ is set to "enabled". As another example, the value of a "coordination request type" field in $SCI_0$ is set to "resource conflict".
- The resource pool *u* (or the SL BWP w, or the SL carrier *a*) is configured with PSCICHS resources.
- The slot (e.g., denoted as $t_{y_c(i)}^{SL}$) where the PSCICHS resource $c_i^{SL}$ is located and the slot $t'^{SL,u}_{y_r(0)}$ satisfy a predefined or configured or pre-configured condition. For example, $\Delta\left(t'^{SL,u}_{y_r(0)}, t_{y_c(i)}^{SL}\right)$ is equal to $T'^{SL}_{proc,\text{CI},1}$ slots. As another example, $\Delta\left(t'^{SL,u}_{y_r(0)}, t_{y_c(i)}^{SL}\right)$ is at least equal to $T'^{SL}_{proc,\text{CI},1}$ slots. As another example,

$\Delta\left(t'^{SL,u}_{y_r(0)}, t^{SL}_{y_c(i)}\right)$ is at most equal to $T'^{SL}_{proc,\text{CI},1}$ slots, where $T'^{SL}_{proc,\text{CI},1} = T^{SL}_{proc,\text{CI},1}$, or $T'^{SL}_{proc,\text{CI},1} = T^{SL}_{proc,\text{CI},1} + 1$, or $T'^{SL}_{proc,\text{CI},1} = T^{SL}_{proc,\text{CI},1} - 1$.

- A first protocol layer entity of the UE has instructed a second protocol layer entity of the UE to report coordination information related to the resource $r_i^{SL}$ (or the slot $t'^{SL,u}_{y_r(i)}$, or $SCI_0$). For example, the coordination information includes whether the resource $r_i^{SL}$ encounters a resource conflict, or whether the slot $t'^{SL,u}_{y_r(i)}$ encounters a resource conflict, or a resource reserved by $SCI_0$ encounters a resource conflict. As another example, the first protocol layer entity of the UE transmits the instruction in the slot $t^{SL}_{y_t(i)}$, wherein the slot $t^{SL}_{y_t(i)}$ and the slot $t^{SL}_{y_c(i)}$ satisfy a predefined or configured or pre-configured condition. For example, $\Delta\left(t^{SL}_{y_t(i)}, t^{SL}_{y_c(i)}\right)$ is equal to $T'^{SL}_{proc,\text{CI},2}$. As another example, $\Delta\left(t^{SL}_{y_t(i)}, t^{SL}_{y_c(i)}\right)$ is at least equal to $T'^{SL}_{proc,\text{CI},2}$. As another example, $\Delta\left(t^{SL}_{y_t(i)}, t^{SL}_{y_c(i)}\right)$ is at most equal to $T'^{SL}_{proc,\text{CI},2}$, where $T'^{SL}_{proc,\text{CI},2} = T^{SL}_{proc,\text{CI},2}$, or $T'^{SL}_{proc,\text{CI},2} = T^{SL}_{proc,\text{CI},2} + 1$, or $T'^{SL}_{proc,\text{CI},2} = T^{SL}_{proc,\text{CI},2} - 1$.

Optionally, the coordination information indication $CI_i$ may correspond to a predefined or configured or pre-configured coordination type (or referred to as a "coordination mode" or a "coordination scheme"). The coordination type may be "resource conflict". Correspondingly, the coordination information indication $CI_i$ may indicate one or more resource indicator values. For example, a set of values that can be indicated by the coordination information indication $CI_i$ may be {resource conflict indicator value 1}, or {resource conflict indicator value 1, resource conflict indicator value 2}, where the resource conflict indicator value 1 is not equal to the resource conflict indicator value 2. The resource conflict indicator value 1 or the resource conflict indicator value 2 may be any one of the following:

- "A resource reservation conflict is present". For example, the resource $r_i^{SL}$ overlaps with one or more other resources (e.g., an SL resource, and e.g., a UL resource) in the time domain and/or the frequency domain and/or the code domain and/or the spatial domain.
- "No resource reservation conflict is present". For example, a situation corresponding to "a resource reservation conflict is present" is not detected.
- "A half-duplex conflict is present". For example, the resource $r_i^{SL}$ temporally overlaps with one or more other resources (e.g., an SL resource, and e.g., a UL resource), and the same UE (e.g., the UE, or a UE that transmits the coordination information indication $CI_i$) needs to perform reception on the former and perform transmission on the latter, or needs to perform transmission on the former and perform reception on the latter.
- "No half-duplex conflict is present". For example, a situation corresponding to "a half-duplex conflict is present" is not detected.
- "A resource conflict is present". For example, a situation corresponding to "a resource reservation conflict is present" or a situation corresponding to "a half-duplex conflict is present" is detected.
- "No resource conflict is present". For example, a situation corresponding to "a resource conflict is present" is not detected.

Optionally, for $i_1 \in \{1, 2, \ldots, N^{SL,RES}_{rsvd}\}$, $i_2 \in \{1, 2, \ldots, N^{SL,RES}_{rsvd}\}$, and $i_1 \neq i_2$, the coordination type corresponding to the coordination information indication $CI_{i_1}$ may be the same as or different from the coordination type corresponding to the coordination information indication $CI_{i_2}$. The PSCICHS resource $c^{SL}_{i_1}$ and the PSCICHS resource $c^{SL}_{i_2}$ may be the same PSCICHS resource or two different PSCICHS resources.

Optionally, the slot $t^{SL}_{y_c(i)}$ where the PSCICHS resource $c_i^{SL}$ is located may be determined by a parameter in a first coordination parameter set. Optionally, the first coordination parameter set may include any one or more of the following:

- The value of the "time resource assignment" field in $SCI_0$.
- The value of the "frequency resource assignment" field in $SCI_0$.
- The value of the "resource reservation period" field in $SCI_0$.
- $t'^{SL,u}_{y_r(0)}$.
- $n^{start}_{subCH,0}$.
- $b^{start}_{subCH,0}$.
- $e^{start}_{subCH,0}$.
- $t'^{SL,u}_{y_r(i)}$.
- $n^{start}_{subCH,i}$.
- $b^{start}_{subCH,i}$.
- $e^{start}_{subCH,i}$.
- $L_{subCH}$.
- The PSCICHS slot period (e.g., denoted as $N^{CI}_{RES}$ in the units of, e.g., slots). $N^{CI}_{RES}$ may be a predefined or configured or pre-configured value.
- The PSCICHS slot offset (e.g., denoted as $O^{CI}_{RES}$ in the units of, e.g., slots). $O^{CI}_{RES}$ may be a predefined or configured or pre-configured value.
- The minimum spacing between a reserved resource and a PSCICHS resource (e.g., denoted as $G^{CI}_{RES}$, in the units of, e.g., slots). $G^{CI}_{RES}$ may be a predefined or configured or pre-configured value.

For example, the slot $t^{SL}_{y_c(i)}$ is determined by the slot $t'^{SL,u}_{y_r(i)}$ and/or the slot $t'^{SL,u}_{y_r(0)}$ and/or $K^{CI}_{RES}$ and/or other parameters. Specifically, for example, the slot $t^{SL}_{y_c(i)}$ may be defined according to one of the following manners:

- $t^{SL}_{y_c(i)}$ is the last PSCICHS slot (e.g., chronologically the last one) that satisfies a first coordination resource slot condition.
- $t^{SL}_{y_c(i)}$ is a PSCICHS slot that satisfies the first coordination resource slot condition and is closest to the slot $t'^{SL,u}_{y_r(i)}$.

Optionally, the first coordination resource slot condition includes any one or more of the following (e.g., in any combination of "and" or "or"):

- $\Delta\left(t^{SL}_{y_c(i)}, t'^{SL,u}_{y_r(i)}\right)$ is at least equal to $K^{CI}_{RES,1}$ slots.
- $\Delta\left(t^{SL}_{y_c(i)}, t'^{SL,u}_{y_r(i)}\right)$ is greater than $K^{CI}_{RES,1}$ slots.
- $\Delta\left(t^{SL}_{y_c(i)}, t'^{SL,u}_{y_r(i)}\right)$ is equal to $K^{CI}_{RES,1}$ slots.
- $\Delta\left(t'^{SL,u}_{y_r(0)}, t^{SL}_{y_c(i)}\right)$ is at least equal to $K^{CI}_{RES,2}$ slots.
- $\Delta\left(t'^{SL,u}_{y_r(0)}, t^{SL}_{y_c(i)}\right)$ is greater than $K^{CI}_{RES,2}$ slots.
- $\Delta\left(t'^{SL,u}_{y_r(0)}, t^{SL}_{y_c(i)}\right)$ is equal to $K^{CI}_{RES,2}$ slots.

Wherein,

- Optionally, $K^{CI}_{RES,1}$ may be an element in the set $\{0, K'^{CI}_{RES,1}, K'^{CI}_{RES,1}+1, K'^{CI}_{RES,1}-1\}$, wherein $K'^{CI}_{RES,1}$

may be a predefined or configured or pre-configured value, and $K^{CI}_{RES,2}$ may be an element in the set $\{0, K'^{CI}_{RES,2}, K'^{CI}_{RES,2}+1, K'^{CI}_{RES,2}-1\}$, wherein $K'^{CI}_{RES,2}$ may be a predefined or configured or pre-configured value. For example, either one of $K'^{CI}_{RES,1}$ and $K'^{CI}_{RES,2}$ may be equal to any one of the following:

- $T^{SL}_{proc,\mathrm{CI},3}$.
- $G^{CI}_{RES}$.
- $\max(G^{CI}_{RES}, T^{SL}_{proc,\mathrm{CI},3})$.
- $\min(G^{CI}_{RES}, T^{SL}_{proc,\mathrm{CI},3})$.
- $G^{CI}_{RES} + T^{SL}_{proc,\mathrm{CI},3}$.
- $G^{CI}_{RES} - T^{SL}_{proc,\mathrm{CI},3}$.
- $|G^{CI}_{RES} - T^{SL}_{proc,\mathrm{CI},3}|$.
- $T^{SL}_{proc,\mathrm{CI},3} - G^{CI}_{RES}$.
- $|T^{SL}_{proc,\mathrm{CI},3} - G^{CI}_{RES}|$.

Optionally, an index of the PSCICHS resource $c^{SL}_i$ (e.g., an index of the PSCICHS resource $c^{SL}_i$ in PSCICHS resources in the slot $t^{SL}_{y_c(i)}$, and e.g., denoted as $x^{SL,CI}_i$ ) is determined by a parameter in a second coordination parameter set. Optionally, the second coordination parameter set may include any one or more of the following:

- The value of the "time resource assignment" field in $SCI_0$.
- The value of the "frequency resource assignment" field in $SCI_0$.
- The value of the "resource reservation period" field in $SCI_0$.
- $t'^{SL,u}_{y_r(0)}$.
- $n^{start}_{subCH,0}$.
- $b^{start}_{subCH,0}$.
- $e^{start}_{subCH,0}$.
- $t'^{SL,u}_{y_r(i)}$.
- $n^{start}_{subCH,i}$.
- $b^{start}_{subCH,i}$.
- $e^{start}_{subCH,i}$.
- $L_{subCH}$.
- $N^{CI}_{RES}$.
- $O^{CI}_{RES}$.
- $G^{CI}_{RES}$.

For example, one or more elements in the second coordination parameter set may be used to determine one or more offsets for calculating the index $x^{SL,CI}_i$. Specifically, for example, $x^{SL,CI}_i = (S^{SL,CI}_i + O^{SL,CI}_i) \bmod N^{CI,RES}_{tfc,num}$, wherein

- $S_i^{SL,CI}$ may be an element in the second coordination parameter set (e.g., $S_i^{SL,CI} = t'^{SL,u}_{y_r(i)}$, or $S_i^{SL,CI} = t'^{SL,u}_{y_r(0)}$), or may be a function of one or more elements in the second coordination parameter set (e.g., $S_i^{SL,CI} = A_i^{SL,CI}$ . ( $\Delta\left(t'^{SL,u}_{y_r(0)}, t'^{SL,u}_{y_r(i)}\right) - T'^{SL}_{proc,\text{CI},4}$ ), or e.g., $S_i^{SL,CI} = A_i^{SL,CI}$ . ( $\Delta\left(t'^{SL,u}_{y_r(0)}, t'^{SL,u}_{y_r(i)}\right) + T'^{SL}_{proc,\text{CI},4}$ )), or may be a predefined or configured or pre-configured value (e.g., $S_i^{SL,CI} = 0$ ).
- $O_i^{SL,CI}$ may be an element in the second coordination parameter set (e.g., $O_i^{SL,CI} = X^{freq}_{start,i}$ ), or may be a function of one or more elements in the second coordination parameter set (e.g., $O_i^{SL,CI} = B_i^{SL,CI} \cdot X^{freq}_{start,i}$ ), or may be a predefined or configured or pre-configured value (e.g., $O_i^{SL,CI} = 0$ ).

Wherein,

- $T'^{SL}_{proc,\text{CI},4}$ may be an element in the set $\{0,\ T^{SL}_{proc,\text{CI},4}, T^{SL}_{proc,\text{CI},4} - 1,\ T^{SL}_{proc,\text{CI},4} + 1\}$.
- $A_i^{SL,CI}$ may be any one of the following:

  ♦ A predefined or configured or pre-configured value (e.g., $A_i^{SL,CI} = 1$ ).

  ♦ The number of sub-channels of the resource pool *u* (e.g., denoted as $N^{SL,u}_{\text{subCH}}$ , and e.g., configured by a parameter *sl-NumSubchannel*).

  ♦ The number of resource blocks of the resource pool *u* (e.g., configured by a parameter *sl-RB-Number,* and e.g., equal to $N^{SL,u}_{\text{subCH}} \cdot n^{SL,u}_{\text{subCH,size}}$, $n^{SL,u}_{\text{subCH,size}}$ being the sub-channel size of the resource pool *u* (e.g., represented by the number of resource blocks, and e.g., configured by a parameter *sl-SubchannelSize*)).

  ♦ The number of sub-channels of the SL BWP w (e.g., $\lfloor N^{SL,BWP}_{PRB} / n^{SL,BWP}_{subCH} \rfloor$, $N^{SL,BWP}_{PRB}$ being the number of resource blocks of the SL BWP w (e.g., configured by *locationAndBandwidth* in a parameter *sl-BWP),* and $n^{SL,BWP}_{subCH}$ being a predefined or configured or pre-configured sub-channel size (e.g., represented by the number of resource blocks), wherein e.g., $n^{SL,BWP}_{subCH}$ may be equal to a common sub-channel size of all resource pools in the SL BWP w).

  ♦ The number $N^{SL,BWP}_{PRB}$ of resource blocks of the SL BWP w.
- $B_i^{SL,CI}$ may be any one of the following:

  ♦ A predefined or configured or pre-configured value (e.g., $B_i^{SL,CI} = 1$ ).

  ♦ $B'^{SL,CI}_i - T'^{SL}_{proc,\text{CI},5}$ .

  ♦ $B'^{SL,CI}_i + T'^{SL}_{proc,\text{CI},5}$ .

Wherein, $B'^{SL,CI}_i$ may be an element in the set {26, 27, 28, 29, 30, 31, 32}, and $T'^{SL}_{proc,\text{CI},5}$ may be an element in the set $\{0,\ T^{SL}_{proc,\text{CI},5},\ T^{SL}_{proc,\text{CI},5} - 1$ , $T^{SL}_{proc,\text{CI},5} + 1\}$ .

- $X^{freq}_{start,i}$ may be an element in the set $\{n^{start}_{subCH,0}, b^{start}_{subCH,0},\ e^{start}_{subCH,0}, n^{start}_{subCH,i}, b^{start}_{subCH,i}$ , $e^{start}_{subCH,i}\}$ .

In addition, optionally, in step S105, received coordination information is reported. For example, the second protocol layer entity of the UE reports, to the first protocol layer entity of the UE, coordination information related to some or all of the resources $r_1^{SL}, \ldots, r_{N_{rsvd}^{SL,RES}}^{SL}$.

Optionally, if PSCICHS reception is not performed on the PSCICHS resource $c_i^{SL}$ (e.g., PSCICHS reception is not performed on the PSCICHS resource $c_i^{SL}$ because the resource $r_i^{SL}$ does not satisfy the first coordination information indication reception condition), a resource conflict indicator value related to the PSCICHS resource $c_i^{SL}$ is not reported.

Optionally, if PSCICHS reception is not performed on the PSCICHS resource $c_i^{SL}$ (e.g., PSCICHS reception is not performed on the PSCICHS resource $c_i^{SL}$ because the resource $r_i^{SL}$ does not satisfy the first coordination information indication reception condition), a default resource conflict indicator value (e.g., the resource conflict indicator value 1, or the resource conflict indicator value 2, or "no resource conflict is present", or "a resource conflict is present", or "no conflict is present", or "a conflict is present") is reported for the PSCICHS resource $c_i^{SL}$.

Optionally, if no PSCICHS is received on the PSCICHS resource $c_i^{SL}$ (e.g., no PSCICHS is received on the PSCICHS resource $c_i^{SL}$ because no UE transmits a PSCICHS on the PSCICHS resource $c_i^{SL}$), a resource conflict indicator value related to the PSCICHS resource $c_i^{SL}$ is not reported.

Optionally, if no PSCICHS is received on the PSCICHS resource $c_i^{SL}$ (e.g., no PSCICHS is received on the PSCICHS resource $c_i^{SL}$ because no UE transmits a PSCICHS on the PSCICHS resource $c_i^{SL}$), a default resource conflict indicator value (e.g., the resource conflict indicator value 1, or the resource conflict indicator value 2, or "no resource conflict is present", or "a resource conflict is present", or "no conflict is present", or "a conflict is present") is reported for the PSCICHS resource $c_i^{SL}$.

Optionally, if a PSCICHS is received on the PSCICHS resource $c_i^{SL}$, a resource conflict indicator value indicated in a coordination information indication $CI_i$ carried by the PSCICHS is reported.

Optionally, if a PSCICHS is received on the PSCICHS resource $c_i^{SL}$, and "a resource reservation conflict is present" (or "a half-duplex conflict is present", or "a resource conflict is present") is indicated in a coordination information indication $CI_i$ carried by the PSCICHS, "a resource conflict is present" (or "a conflict is present") is reported.

Optionally, if a PSCICHS is received on the PSCICHS resource $c_i^{SL}$, and "no resource reservation conflict is present" (or "no half-duplex conflict is present", or "no resource conflict is present") is indicated in a coordination information indication $CI_i$ carried by the PSCICHS, "no resource conflict is present" (or "no conflict is present") is reported.

Optionally, in Embodiment 1 of the present invention, when $SCI_0$ indicates $N_{SCI}^{SL,RES} = 1$ resource (i.e., $N_{rsvd}^{SL,SCI} = 0$ resources), step S103 and step S105 are not performed.

Optionally, in Embodiment 1 of the present invention, any one of $\Delta\left(t'^{SL,u}_{y_r(0)}, t^{SL}_{y_c(i)}\right)$, $\Delta\left(t^{SL}_{y_t(i)}, t^{SL}_{y_c(i)}\right)$, $\Delta\left(t^{SL}_{y_c(i)}, t'^{SL,u}_{y_r(i)}\right)$, and $\Delta\left(t'^{SL,u}_{y_r(0)}, t'^{SL,u}_{y_r(i)}\right)$ may be defined according to a physical slot offset, or an SL slot offset, or a slot offset in the resource pool $u$, or a slot offset in the PSCICHS slot set $T_{RES}^{CI}$.

Optionally, in Embodiment 1 of the present invention, any one of $T_{proc,\mathrm{CI},1}^{SL}$, $T_{proc,\mathrm{CI},2}^{SL}$, $T_{proc,\mathrm{CI},3}^{SL}$, $T_{proc,\mathrm{CI},4}^{SL}$, and $T_{proc,\mathrm{CI},5}^{SL}$ may be equal to any one of the following:

- 0.
- $T_{proc,0}^{SL}$.
- $T_{proc,0}^{SL} + 1$.

- $T^{SL}_{proc,0} - 1$.
- $T^{SL}_{proc,1}$.
- $T^{SL}_{proc,1} + 1$.
- $T^{SL}_{proc,1} - 1$.
- $\max\left(T^{SL}_{proc,0}, T^{SL}_{proc,1}\right)$.
- $\min(T^{SL}_{proc,0}, T^{SL}_{proc,1})$.
- $T^{SL}_{proc,0} + T^{SL}_{proc,1}$.
- $T^{SL}_{proc,0} + T^{SL}_{proc,1} - 1$.
- $T^{SL}_{proc,0} - T^{SL}_{proc,1}$.
- $\left|T^{SL}_{proc,0} - T^{SL}_{proc,1}\right|$.
- $T^{SL}_{proc,1} - T^{SL}_{proc,0}$.
- $\left|T^{SL}_{proc,1} - T^{SL}_{proc,0}\right.$.

Wherein,

- $T^{SL}_{proc,0}$ may be a predefined or configured or pre-configured value, or a value depending on $\mu_{SL}$. For example, if $\mu_{SL}$ = 0, then $T^{SL}_{proc,0} = 1$. As another example, if $\mu_{SL}$ = 1, then $T^{SL}_{proc,0} = 1$. As another example, if $\mu_{SL}$ = 2, then $T^{SL}_{proc,0} = 2$. As another example, if $\mu_{SL}$ = 3, then $T^{SL}_{proc,1} = 4$.
- $T^{SL}_{proc,1}$ may be a predefined or configured or pre-configured value, or a value depending on $\mu_{SL}$. For example, if $\mu_{SL'}$ = 0, then $T^{SL}_{proc,1} = 3$. As another example, if $\mu_{SL}$ = 1, then $T^{SL}_{proc,1} = 5$. As another example, if $\mu_{SL}$ = 2, then $T^{SL}_{proc,1} = 9$. As another example, if $\mu_{SL}$ = 3, then $T^{SL}_{proc,1} = 17$.

Optionally, in Embodiment 1 of the present invention, the first protocol layer entity is a MAC layer (or referred to as MAC sub-layer) protocol entity, or an RLC layer protocol entity, or a PDCP layer protocol entity, or an RRC layer protocol entity, or a PC5-RRC layer protocol entity, or a PC5-S layer protocol entity, or a physical layer (or referred to as PHY layer) protocol entity.

Optionally, in Embodiment 1 of the present invention, the second protocol layer entity is a physical layer protocol entity, or a MAC layer protocol entity, or an RLC layer protocol entity, or a PDCP layer protocol entity, or an RRC layer protocol entity, or a PC5-RRC layer protocol entity, or a PC5-S layer protocol entity.

Optionally, in Embodiment 1 of the present invention, step S101, step S 103, and step S 105 (where applicable) are performed by the second protocol layer entity of the UE.

Therefore, as described in Embodiment 1, provided in the present invention is a method, in which one or more resources used to transmit a coordination information indication are determined by utilizing specific parameters (e.g., starting sub-channels, etc.) of two or more conflicting resources, thereby effectively reducing the number of coordination information indications required to be transmitted and the use of corresponding resources, and improving the efficiency of inter-UE coordination.

In the present invention, "inter-UE coordination" and other related terms (e.g., "coordination information indication", "coordination request indication", "preferred resource indication", "non-preferred resource indication", "resource conflict indication", "sidelink coordination control information", "physical sidelink coordination information channel/signal", "physical sidelink coordination request channel/signal", etc.) may be defined by functions thereof in a system and/or a corresponding procedure and/or corresponding signaling. When applied to a specific system, the terms may be replaced with other names.

**[Variant Embodiment]**

Hereinafter, FIG. 2 is used to illustrate user equipment that can perform the method performed by user equipment described in detail above in the present invention as a variant embodiment.

FIG. 2 shows a block diagram of user equipment (UE) according to the present invention.

As shown in FIG. 2, user equipment (UE) 20 includes a processor 201 and a memory 202. The processor 201 may include, for example, a microprocessor, a microcontroller, an embedded processor, and the like. The memory 202 may include, for example, a volatile memory (such as a random access memory (RAM)), a hard disk drive (HDD), a non-volatile memory (such as a flash memory), or other memories. The memory 202 stores program instructions. The instructions, when run by the processor 201, can implement the above method performed by user equipment as described in detail in the present invention.

The method and related equipment according to the present invention have been described above in combination with preferred embodiments. It should be understood by those skilled in the art that the method shown above is only exemplary, and the above embodiments can be combined with one another as long as no contradiction arises. The method of the present invention is not limited to the steps or sequences illustrated above. The network node and user equipment shown above may include more modules, for example, modules that may be developed or developed in the future and may be used for a base station, an Access and Mobility Management Function (AMF), a User Plane Function (UPF), a Mobility Management Entity (MME), a Serving Gateway (S-GW), or UE. Various identifiers shown above are only exemplary, and are not meant for limiting the present invention. The present invention is not limited to specific information elements serving as examples of these identifiers. A person skilled in the art could make various alterations and modifications according to the teachings of the illustrated embodiments. Those skilled in the art should understand that part or all of the mathematical expressions, mathematical equations, or mathematical inequalities may be simplified or transformed or rewritten to some extent, for example, incorporating constant terms, or interchanging two addition terms, or interchanging two multiplication terms, or moving a term from the left side of an equation or inequality to the right side after changing the plus or minus sign thereof, or moving a term from the right side of an equation or inequality to the left side after changing the plus or minus sign thereof or the like. Mathematical expressions, mathematical equations, or mathematical inequalities before and after the simplification or transformation or rewriting may be considered to be equivalent to each other. Those skilled in the art would appreciate that a subset of a set may be the set itself. For example, a subset of $A = \{a_1, a_2\}$ may be $\{a_1, a_2\}$, or $\{a_1\}$, or $\{a_2\}$, or an empty set.

It should be understood that the above-described embodiments of the present invention may be implemented by software, hardware, or a combination of software and hardware. For example, various components of the base station and user equipment in the above embodiments can be implemented by multiple devices, and these devices include, but are not limited to, an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present invention, the term "base station" may refer to a mobile communication data and/or control switching center having specific transmission power and a specific coverage area and including functions such as resource allocation and scheduling, data reception and transmission, and the like. The term "user equipment" may refer to a user mobile terminal, such as a terminal device that can perform wireless communication with a base station or a micro base station, including a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., compact disc read-only memory (CD-ROM)), a flexible disk or a hard disk and the like, or other media such as firmware or micro codes on one or more read-only memory (ROM) or random access memory (RAM) or programmable read-only memory (PROM) chips, or a downloadable software image, a shared database and the like in one or more modules. Software or firmware or such configuration may be installed on a computing device such that one or more processors in the computing device perform the technical solutions described in the embodiments of the present invention.

In addition, each functional module or each feature of the base station device and the terminal device used in each of the above embodiments may be implemented or executed by a circuit, which is usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, or discrete hardware components, or any combination of the above. The general purpose processor may be a microprocessor, or the processor may be an existing processor, a controller, a microcontroller, or a state machine. The aforementioned general purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, those skilled in the art would understand that various modifications, substitutions, and alterations may be made to the present invention without departing from the spirit and scope of the present invention. Therefore, the present invention should not be limited by the above-described embodiments, but should be defined by the appended claims and their equivalents.

## Claims

**1.** A method performed by user equipment (UE), **characterized by** comprising:

reserving a resource $r_i^{SL}$ in a slot $t'^{SL,u}_{y_r(i)}$ via sidelink control information (SCI) transmitted in a slot $t'^{SL,u}_{y_r(0)}$, and

determining a PSFCH slot $t^{SL}_{y_c(i)}$ corresponding to the resource $r_i^{SL}$ and used to receive a conflict indication, and

if the PSFCH slot $t^{SL}_{y_c(i)}$ is present, receiving the conflict indication in the PSFCH slot $t^{SL}_{y_c(i)}$, otherwise, not receiving the conflict indication, wherein

the PSFCH slot $t^{SL}_{y_c(i)}$ is at least $K^{CI}_{RES,1}$ slots before the slot $t'^{SL,u}_{y_r(i)}$, wherein $K^{CI}_{RES,1}$ is a predefined value depending on a corresponding subcarrier spacing configuration of SL transmission, and

the PSFCH slot $t^{SL}_{y_c(i)}$ is at least $K^{CI}_{RES,2}$ slots after the slot $t'^{SL,u}_{y_r(0)}$, wherein $K^{CI}_{RES,2}$ is a configured or preconfigured value.

**2.** User equipment, comprising:

a processor; and
a memory having instructions stored therein,
wherein the instructions, when run by the processor, perform the method according to claim 1.

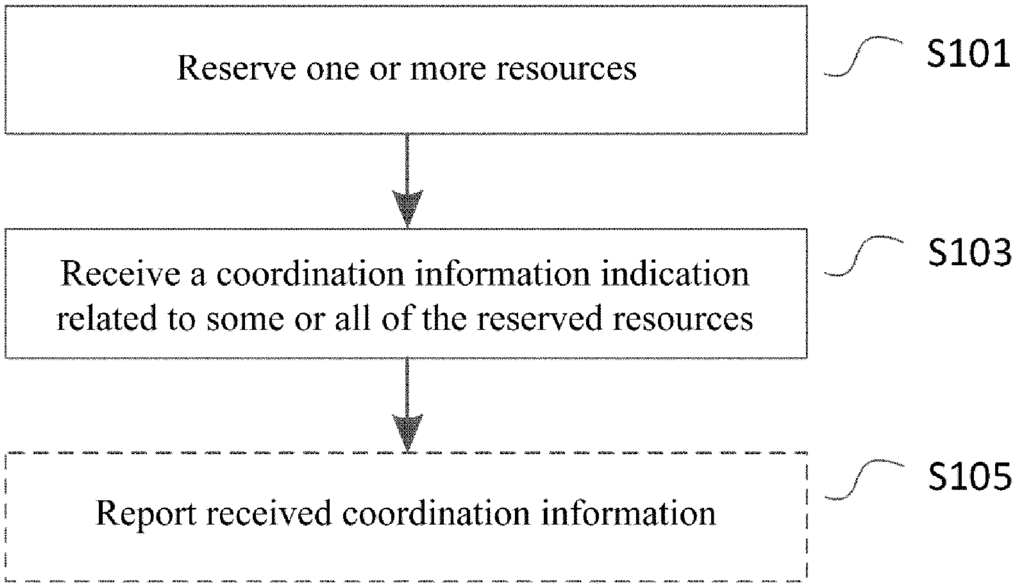
Reserve one or more resources
S101
Receive a coordination information indication related to some or all of the reserved resources
S103
Report received coordination information
S105

FIG. 1

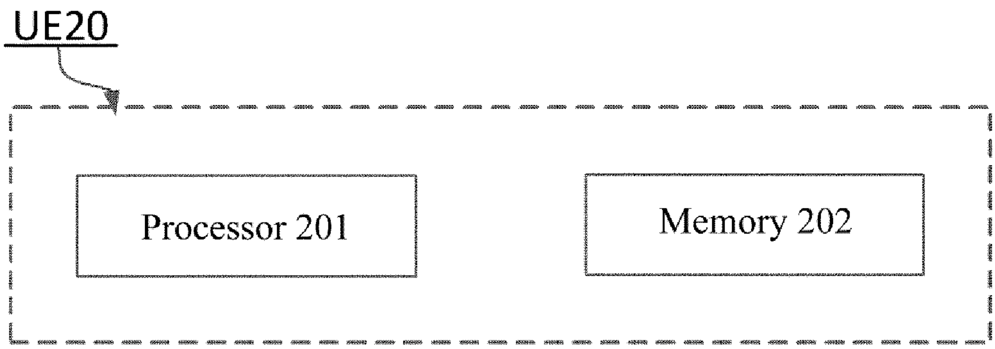
UE20
Processor 201
Memory 202

FIG. 2

**INTERNATIONAL SEARCH REPORT**

International application No.
**PCT/CN2022/108934**

**A. CLASSIFICATION OF SUBJECT MATTER**

H04L 5/00(2006.01)i；H04L 1/18(2006.01)i

According to International Patent Classification (IPC) or to both national classification and IPC

**B. FIELDS SEARCHED**

Minimum documentation searched (classification system followed by classification symbols)

H04L/1-；H04/5/-；H04W72/-

Documentation searched other than minimum documentation to the extent that such documents are included in the fields searched

Electronic data base consulted during the international search (name of data base and, where practicable, search terms used)

WPABSC; CNTXT; CNABS; 中国知网, CNKI; 百度文库, BAIDU WENKU; ENTXTC: SCI, 侧行控制信息, 冲突, 预留, 资源, 指示, 时隙, 子载波间隔, 协作, 协作传输, 冲突指示, 预留资源 EPTXT; USTXT; ENTXT; WOTXT; 3GPP; VEN: PSFCH, inter-UE coordination, sidelink transmission, resource collision, resource reservation, SCI, resource conflict, RESERVED resource, sidelink, conflict instruction, slot, overlap, INTER-UE COORDINATION, conflict instructions, SCI, indication, conflict

**C. DOCUMENTS CONSIDERED TO BE RELEVANT**

| Category* | Citation of document, with indication, where appropriate, of the relevant passages | Relevant to claim No. |
|---|---|---|
| X | CN 112840586 A (BEIJING XIAOMI MOBILE SOFTWARE CO., LTD.) 25 May 2021 (2021-05-25)<br>description, paragraphs [0101]-[0126] | 1-2 |
| A | CN 112512124 A (ZHEJIANG LAB) 16 March 2021 (2021-03-16)<br>entire document | 1-2 |
| A | US 2021127364 A1 (INTEL CORP.) 29 April 2021 (2021-04-29)<br>entire document | 1-2 |
| A | NOKIA et al. "Inter-UE coordination in sidelink resource allocation mode 2"<br>*3GPP TSG RAN WG1#104b-e R1-2102362,* 07 April 2021 (2021-04-07),<br>entire document | 1-2 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 September 2022** | **26 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/108934**

| Patent document cited in search report | | | Publication date (day/month/year) | Patent family member(s) | | | Publication date (day/month/year) |
|---|---|---|---|---|---|---|---|
| CN | 112840586 | A | 25 May 2021 | | None | | |
| CN | 112512124 | A | 16 March 2021 | CN | 112512124 | B | 09 July 2021 |
| US | 2021127364 | A1 | 29 April 2021 | WO | 2020092939 | A1 | 07 May 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- New WI proposal: Support for V2V services based on LTE sidelink. *RP-152293*
- New WID on 3GPP V2X Phase 2. *RP-170798*
- New WID on New Radio Access Technology. *RP-170855*
- New WID on 5G V2X with NR sidelink. *RP-190766*
- WID revision: NR sidelink enhancement. *RP-201385*